# EUROPEAN PATENT SPECIFICATION

(11) **EP 3 822 022 B1**
(45) Date of publication and mention of the grant of the patent: **20.08.2025**
(21) Application number: 18926173.8
(22) Date of filing: 10.07.2018
(51) Int. Cl.: B23Q 3/155, B23Q 17/00, B23Q 17/22, B23Q 17/24, G05B 19/4069, G05B 19/4093, G05B 19/4061

(54) **MACHINE TOOL SYSTEM, AND TOOL DETERMINING METHOD**
WERKZEUGMASCHINENSYSTEM UND WERKZEUGBESTIMMUNGSVERFAHREN
SYSTÈME DE MACHINE-OUTIL ET PROCÉDÉ DE DÉTERMINATION D'OUTIL

(43) Date of publication of application: 19.05.2021
(73) Proprietor: Makino Milling Machine Co., Ltd., Tokyo 152-8578 (JP)
(72) Inventor: KASAHARA, Tadashi, Aiko-gun, Kanagawa 243-0303 (JP); FURUTA, Megumi, Aiko-gun, Kanagawa 243-0303 (JP)
(74) Representative: McWilliams, David John
(86) International application number: PCT/JP2018/026092
(87) International publication number: WO 2020/012569

(56) References cited:
- EP-A1- 0 697 639
- EP-A1- 3 330 043
- WO-A1-2017/056264
- DE-A1- 102007 017 048
- DE-A1- 102016 005 559
- JP-A- 2004 009 293
- JP-A- 2010 234 451
- JP-A- H 086 621
- JP-U- S6 274 951
- US-A1- 2014 233 839

## Description

### FIELD

The present invention relates to a machine tool system and a determining method with which it can be determined whether a wrong or invalid tool is held in a tool magazine or whether an incorrect tool number or pot number has been assigned.

### BACKGROUND

In machine tool systems which comprise a tool magazine which holds a plurality of tools and a tool exchange device which exchanges tools between the tool magazine and the spindle, the operator visually confirms the tools used for machining one by one and mounts them in the specified pots of the tool magazine, at that time, if the correct tool is not mounted in the tool magazine with the correct tool number or pot number assigned, machining of the workpiece according to the NC machining program cannot be performed, and the tool and the workpiece or machine tool may collide or interfere with each other, damaging the tool, the workpiece, and the machine tool.

Patent Literature 1 describes an automatic collation and recognition device for a tool which, in order to solve such a problem, image-processes an image of a tool captured by an image-capture device, extracts and calculates feature amounts of the tool from the image data, and collates the extracted and calculated feature amount data of the tool with master data of the tool, whereby it can be recognized whether or not the captured tool matches the tool specified by an NC device. Patent Literature 2 describes a machine tool system comprising: an imaging device which images the tool mounted on a tool holder along with the tool holder, an interference checking device which simulates machining, prior to machining, using the machining program and shape data of the workpiece, the tool, and a machine tool to confirm the presence or absence of interference between at least the tool and the workpiece, and a controller which acquires the shape data of the tool mounted on the tool holder from the interference checking device.

### [CITATION LIST]

### [PATENT LITERATURE]

[PTL 1] Japanese Unexamined Patent Publication (Kokai) No. 06-134638
[PTL 2] EP 0697639 A1 describes a known method for checking interference.
[PTL 3] EP 3330043 A1 describes a known tool exchange method and tool exchange device.

### SUMMARY

### [TECHNICAL PROBLEM]

In the automatic collation and recognition device for a tool of Patent Literature 1, the master data is the dimensional data of the tool itself, and the feature amount of the tool extracted from the image data is also the dimensions of characteristic shape of the tool itself. Thus, if the tool is not mounted on the correct tool holder described in the machining program, proper machining cannot be performed according to the machining program, and collision or interference between the tool and the workpiece or machine tool cannot be prevented.

The present invention aims to solve such problems of the prior art, and the object of the present invention is to provide a machine tool system and a tool determining method with which it can be assuredly determined whether or not the tool mounted on the tool magazine is wrong or whether or not the tool is damaged.

### [SOLUTION TO PROBLEM]

In order to achieve the object described above, according to the present invention, there is provided a machine tool system as defined in claim 1.

Further, according to the present invention, there is provided a tool determining method for determining whether or not a valid tool is mounted on a tool magazine of a machine tool system as defined in claim 3.

### [ADVANTAGEOUS EFFECTS OF INVENTION]

According to the present invention, since the tool is imaged in a state mounted on the tool holder, and the obtained image data and a two-dimensional tool model generated from shape data of the tool in a state in which the tool is mounted on the tool holder from the interference checking unit are compared, it can be assuredly determined whether or not the tool mounted on the tool magazine is the correct tool described in the interference-checked machining program or whether or not the tool is damaged.

### BRIEF DESCRIPTION OF DRAWINGS

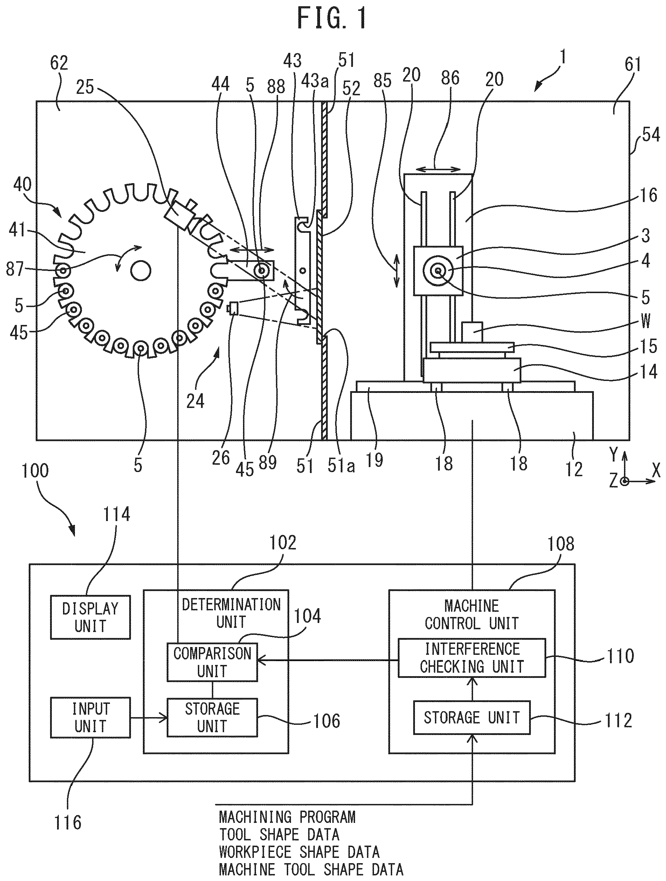

FIG. 1 is a schematic cross-sectional view of the machine tool system according to an embodiment of the present invention shown along with a block diagram of a controller.
FIG. 2 is a flowchart of a tool determining method.
FIG. 3 shows schematic views illustrating (a) a binary image obtained by imaging a tool held by a tool holder, and (b) a two-dimensional tool model of a tool mounted on a tool holder generated from tool shape data.
FIG. 4(a) shows schematic views illustrating (a) a binary image showing an enlarged view of the tool part of the binary image of FIG. 3(a), and (b) an enlarged image of the tool part of the two-dimensional tool model of FIG. 3(b).
FIG. 5 is a schematic view showing another example of a two-dimensional tool model of a tool mounted on a tool holder, which is generated from tool shape data.
FIG. 6 is a schematic view showing a threshold value editing screen or dialog box displayed on a display unit.

### DESCRIPTION OF EMBODIMENTS

The preferred embodiments of the present invention will be described below with reference to the attached drawings.

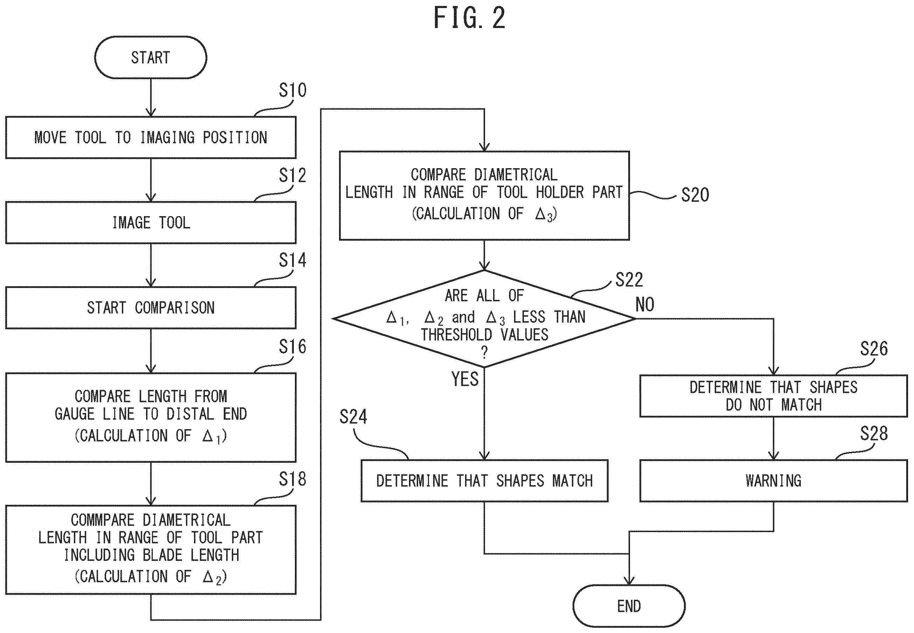

First, in FIG. 2, the machine tool system to which the present invention is applied has a numerical control-type machine tool 1 which performs machining by automatically moving a tool and a workpiece W relative to each other based on a machining program. The machine tool 1 is a horizontal machining center. The machine tool 1 comprises feed devices for relatively moving the tool and the workpiece W along three orthogonal axes including the X-axis, Y-axis, and Z-axis. The feed devices move driven objects in the directions of the plurality of axes.

The machine tool 1 comprises a bed 12 serving as a base. An X-axis guide rail 19 extending in the X-axis directions, which are the horizontal left and right directions, is affixed to the upper surface of the bed 12. A column 16 is arranged on the upper surface of the X-axis guide rail 19. The column 16 is formed so as to be movable along the A-axis guide rail 19 as indicated by arrow 86. A Y-axis guide rail 20 extending in the Y-axis directions, which are the upward and downward directions, is affixed to the front surface of the column 16. A spindle head 3 is supported by the Y-axis guide rail 20. The spindle head 3 is formed so as to be movable along the Y-axis guide rail 20, as indicated by arrow 85.

Furthermore, a Z-axis guide rail 18 which extends in the Z-axis directions, which are the horizontal frontward and rearward directions, is affixed to the upper surface of the bed 12. A table 14 is arranged on the upper surface of the Z-axis guide rail 18. The workpiece W is affixed to the table 14 via a pallet 15. The table 14 is formed so as to be movable in the Z-axis directions along the Z-axis guide rail 18.

Each of the X-axis, Y-axis and Z-axis feed devices can have a ball screw (not illustrated) extending in the X-axis, Y-axis, or Z-axis direction, and an X-axis, Y-axis, or Z-axis servo motor (not illustrated) connected to one end of the ball screw, and a nut (not illustrated) attached to the column 16, spindle head 3, or table 14 for engaging with the ball screw. Furthermore, a measurement device such as a digital scale (not illustrated) is provided on each of the X-axis, Y-axis, and Z-axis to measure the coordinate positions in the X-axis, Y-axis, and Z-axis directions.

The spindle head 3 supports a spindle 4 so as to be rotatable about an axis of rotation extending in the horizontal frontward and backward directions. A tool 5 for machining the workpiece W is attached to the distal end of the spindle 4. A servo motor (not illustrated) which rotationally drives the spindle 4 is housed in the spindle head 3. The tool 5 has a shape which is rotationally symmetric about its axis or is a solid of revolution, such as a ball end mill, square end mill, face milling cutter, tapping tool, or drill.

The machine tool 1 moves the tool 5 in the X-axis direction and Y-axis direction and moves the workpiece W in the Z-axis direction. Note that the forms of the feed devices are not particularly limited, and the tool can be moved relative to the workpiece by any device. Furthermore, in addition to linear feed axes, the machine tool may have rotary feed axes which rotate about predetermined axes.

The machine tool 1 comprises a tool exchange device 40 which automatically exchanges tools. The machine tool 1 comprises a machining chamber 61 in which the workpiece W is machined and a tool storage chamber 62 for storing the tools 5. The machining chamber 62 and the tool storage chamber 62 are surrounded by a splashguard 54. Furthermore, the machining chamber 61 and the tool storage chamber 62 are separated by a partition wall 51. The bed 12, column 16, spindle head 3, etc., are arranged in the interior of the machining chamber 61. The tool exchange device 40 is arranged in the interior of the tool storage chamber 62. An aperture 51a through which a tool 5 is moved between the machining chamber 61 and the tool storage chamber 62 is formed in the partition wall 51. Furthermore, a shutter 52 for opening and closing the aperture 51a is arranged on the partition wall 51. The shutter 52 is supported by the partition wall 51.

The machine tool 1 has a motor for driving the shutter 52. The shutter 52 is formed so as to be movable relative to the partition wall 51. The shutter 52 of the present embodiment is formed so as to be movable in the Z-axis direction. By moving the shutter 52 to form an opening, movement of the tool 5 through the aperture 51a can be performed.

The tool exchange device 40 has a tool magazine 41 in which a plurality of tools 5 are stored, and a transfer device for transferring a tool 5 between the tool magazine 41 and the spindle 4. The tool magazine 41 of the present embodiment is formed so as to hold tools 5 around a base material formed in a disk shape via a tool holder 45. The tool exchange device 40 includes a motor which rotates the tool magazine 41. The tool magazine 41 rotates as indicated by arrow 87.

The transfer device has a tool shifter 44 and a tool exchange arm 43. The tool shifter 44 moves the tool 5 mounted on the tool holder 45 along with the tool holder 45 between the tool magazine 41 and a tool standby position. By moving the tool shifter 44 in the direction indicated by arrow 88, tools 5 can be removed from the tool magazine 41 and tools 5 can be attached to the tool magazine 41. The tool exchange arm 43 is formed in a stick-like form. The tool exchange arm 43 is provided, on opposing ends thereof, with holding parts 43a for holding the tools 5. The tool exchange device 40 has a motor for rotating the tool exchange arm 43. The tool exchange arm 43 is formed so as to be rotatable about an axis of rotation extending in the Z-axis direction, as indicated by arrow 89.

The standby position is a position in which the tool can be exchanged between the tool exchange arm 43 and the tool shifter 44. Specifically, the tool exchange arm 43 receives the tool from the tool shifter 44 holding the tool in the standby position on one end, which is not holding a tool 5, and transfers a tool 5, on the other end holding the tool 5, to the empty tool shifter 44 standing-by at the standby position.

When the tool 5 is exchange, in the machining chamber 61, the spindle head 3 moves to a predetermined position for exchanging the tool 5. The spindle head 3 is moved to a position in which the tool 5 attached to the spindle 4 can be held by a holding part 43a when the tool exchange arm 43 rotates. The tool 5 which has completed machining is attached to the spindle 4. In the tool storage chamber 62, the tool magazine 41 rotates to a position where the tool 5 to be used next is held by the tool shifter 44. The tool shifter 44 moves the tool 5 to be used next from the tool magazine 41 to the standby position.

Next, the shutter 52 opens and the tool exchange arm 43 rotates. The tool exchange arm 43 holds the tool which has been held by the tool shifter 44 and the tool which has been attached to the spindle 4. Further, by rotating the tool exchange arm 43, the tool 5 to be used next is attached to the spindle 4 and the tool 5 which has completed machining is attached to the tool shifter 44. The tool shifter 44 returns the tool 5 which has been completed machining to the tool magazine 41.

Thus, the tool exchange device 40 can move the tool 5 attached to the spindle 4 to the tool magazine 41. Furthermore, the tool exchange device 40 can move the tool 5 housed in the tool magazine 41 to the spindle 4. After exchange of tools 5 is complete, the tool exchange arm 43 rotates to the original state. After the shutter 52 closes, the subsequent machining begins in the machining chamber 61.

Note that the tool exchange device is not limited to the form described above, and it is sufficient that it be formed so as to be capable of exchanging the tool attached to the spindle and the tool housed in the tool magazine.

The machine tool 1 comprises an imaging device 24 for imaging the tool 5. The imaging device 24 is a backlight system in which the background of the tool 5 becomes brighter while the tool 5 becomes darker in the image of the tool 5. The imaging device 24 images the tool 5 arranged at a predetermined imaging position in the interior of the tool storage chamber 62. The imaging device 24 includes a camera 25. As the camera 25, any camera capable of image processing of the captured image such as a CCD (Charge Coupled Device) camera can be used. The camera 25 of the present embodiment is arranged so as to image the tool 5 when the tool 5 is arranged in the standby position. Note that the imaging position is not limited to the standby position and can be set to any position. In the present embodiment, the tool 5 is mounted on the tool holder 45 when the tool 5 is imaged by the imaging device.

The shutter 52 of the present embodiment functions as a reflective surface arranged on the side opposite the camera 25 with respect to the tool 5 in the direction facing the tool 5 arranged in the standby position from the camera 25. The shutter 52 is arranged behind the tool 5 when viewed from the camera 25. The camera 25 is arranged at a position where substantially the entire background of the tool in the image corresponds to the shutter 52 when the tool 5 is imaged in the standby position. The shutter 52 is arranged at a position where it intersects a straight line connecting the camera 25 and the tool 5 arranged at the standby position. The tool 5 is arranged between the shutter 52 and the camera 25.

The shutter 52 has a reflective surface which reflects light. The reflective surface is formed so as to scatter light. In the present embodiment, the surface of the shutter 52 facing the interior of the tool storage chamber 62 corresponds to the reflective surface. In the shutter 52 of the present embodiment, the reflective surface is painted. The reflective surface is not limited to this form, and it is sufficient that it be formed so as to scatter at least a part of the light incident thereon. In other words, as long as the reflective surface does not have the mirror surface property of reflecting substantially all of the incident light in one direction, the reflecting surface may be any material. For example, rather than the surface being painted, the reflective surface may be exposed metal.

The imaging device 24 comprises an illumination device 26 as a light source for emitting light toward the shutter 52. The illumination device 26 of the present embodiment is an LED (Light Emitting Diode) illuminator. Since the shutter 52 scatters light on the reflective surface, a part of the light emitted from the illumination device 26 is oriented toward the camera 25. The imaging device 24 of the present embodiment employs an indirect illumination method in which the tool 5 is illuminated with the reflected diffusely reflected light, instead of the direct illumination method in which the tool 5 is directly illuminated, as described above. The illumination device 26 is arranged so that an image in which the tool 5 is darker than the background of the tool 5 is captured by the diffusely reflected light reflected by the reflecting surface of the shutter 52.

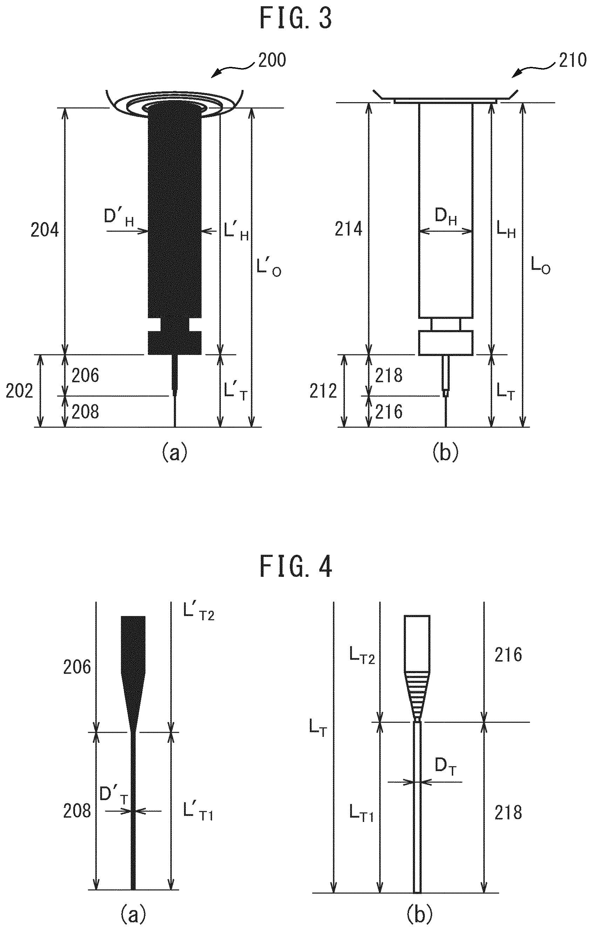

As shown in FIG. 3(a), when the tool 5 is imaged, the portion corresponding to the tool 5 is entirely black. In contrast thereto, the background is brightened by the diffusely reflected light on the reflecting surface. In this manner, the imaging device 24 captures an image in which the portion of the tool 5 is darker than the background. For example, when the color of the light emitted by the illumination device is white, the background becomes white and the portion of the tool 5 becomes black. A controller 100, which will be described later, can calculate the shape of the tool 5 using such an image.

The illumination device 26 preferably has a brightness which makes the entirety of the portion of tool 5 captured by the camera 25 black. In other words, the illumination device 26 is preferably a bright light source which generates a brightness that makes the entirety of the portion of the tool 5 black. Due to this configuration, the shape of the tool 5 in the image is clarified, whereby the shape of the tool 5 can be more accurately measured.

The illumination device 26 can use any illumination other than the LED illumination. By adopting LED illumination as the illumination device 26, the brightness can be increased in a short time. Thus, the time necessary for imaging can be shortened. Further, the use of LED illumination can make the illumination device smaller than other illumination devices.

A plurality of illumination devices may be provided as the light source. For example, the light source may have first and second illumination devices arranged in different positions. By arranging a plurality of illumination devices, the reflective surface can be illuminated from a plurality of directions. As a result, the occurrence of shadows of large foreign objects can be suppressed. In the image, the appearance of black objects in the background of the tool can be suppressed. Alternatively, by arranging a plurality of illumination devices, the background of the tool of the image can be brightened, whereby color unevenness or the like occurring in the background of the tool in the image can be suppressed. As a result, the shape of the tool can be accurately measured.

The machine tool system further comprises a controller 100 for controlling the machine tool 1. The controller 100 can be constituted by providing a CPU (Central Processing Unit), RAM (Random Access Memory), ROM (Read-Only Memory), an electronic data storage device such as a hard disk or a solid state drive (SSD), which are connected to each other via busses, and associated software.

The controller 100 comprises, as primary constituent elements, a determination unit 102, a machine control unit 108, a display unit 114, and an input unit 116. The determination unit 102 has a comparison unit 104 and a storage unit 106. The machine control unit 108 has an interference checking unit 110 and a storage unit 112. The machine control unit 108 can be formed from an NC device, which controls the feed devices of the machine tool 1 and a machine controller for controlling the tool magazine 41, the tool shifter 44, the tool exchange device 40, and the imaging device 24.

In the present embodiment, the interference checking unit 110 of the machine control unit 18 can be constituted by simulation software which is executed by the NC device or machine controller for the machine tool 1. The machining program for machining the workpiece W, shape data of the tool 5 used for machining and the tool holder 45 on which the tool 5 is mounted, shape data of the workpiece W to be machined, and shape data of the machine tool 1 are input into and stored in the storage unit 112 of the machine control unit 108.

The interference checking unit 110 reads the machining program, the shape data of the tool, the shape data of the workpiece, and the shape data of the machine tool 1 from the storage unit 112 prior to actual machining, simulates the machining of the workpiece in accordance with the machining program, and determines, in the simulation, whether or not the tool 5 interferes with the workpiece W or machine tool 1.

The determination unit 102 can comprise a CPU and a storage device independent of the NC device and the machine controller constituting the machine control unit 108, but may be configured as a part of the NC device and/or the machine controller as software.

The comparison unit 104 of the determination unit 102 receives image data of the tool 5 captured by the camera 25 of the imaging device 24 from the imaging device 24. The image data of the tool 5 from the imaging device 24 is associated with a tool number assigned to the imaged tool 5 or a pot number of a tool pot (not illustrated) of the tool magazine 41 on which the tool 5 is mounted.

The comparison unit 104 receives shape data of the tool from the interference checking unit 110. The shape data of the tool from the interference checking unit 110 is associated with the tool number assigned to the associated tool 5 or the pot number of the tool pot (not illustrated) of the tool magazine on which the tool is mounted. The tool number or pot number associated with the shape data of the tool 5 from the interference checking unit 110 is described in the machining program when simulation of machining is performed by the interference checking unit 110.

A threshold value which is described later is stored in the storage unit 106. The threshold value can be, for example, input from an input unit 116. The display unit 114 displays determination results of the determination unit 102 and simulation results of the interference checking unit 110. The display unit 114 can be a liquid crystal display or a touch panel. The input unit 116 can be formed from, for example, various buttons, input keys (not illustrated), etc., provided on the operation panel of the machine tool 1. When the display unit 114 is formed by a touch panel, the display unit 114 constitutes a part of the input unit 116. The input unit 116 may be a personal computer (not illustrated) or a server (not illustrated) connected by a communication network (not illustrated) such as a LAN.

The mode of operation of the present embodiment will be described below with reference to the flowchart shown in FIG. 2.

After the operator of the machine tool 1 has mounted the tool 5 on the tool magazine 41, the tool 5 is transferred to an imaging position in accordance with a tool imaging command from the machine control unit 108 of the controller 100 (step S10). Next, the tool 5 is imaged as described above (step S12).

The obtained image data of the tool 5 is output to the comparison unit 104 of the determination unit 102 along with the tool number of the tool 5 or the pot number of the tool pot of the tool magazine 41 in which the tool 5 is mounted. The comparison unit 104 receives shape data of the tool 5 corresponding to the tool number or pot number from the interference checking unit 110. The comparison unit 104 compares the received image data with the tool shape data, in the manner described later (step S14).

Referring to FIGS. 3 and 4, FIG. 3(a) shows a binary image 200 of the tool captured by the imaging device 24 (camera 25), and FIG. 4(a) is an enlarged view of the tool part of the binary image 200. FIG. 3(b) shows a two-dimensional tool model 210 generated by the comparison unit 104 based on the tool shape data from the interference checking unit 110, and FIG. 4(b) is an enlarged view of the tool part of the two-dimensional tool model 210.

The binary image 200 of the tool has a portion (tool part) 202 of the tool protruding from the tool holder, and a portion (holder part) 204 of the tool holder which holds the tool. The tool part 202 has a portion 206 of the shank of the tool and a portion 208 of a blade with a cutting edge formed thereon.

The comparison unit 104 can measure the tool length L_{0'}, which is the axial length from the gauge line of the tool holder to the distal end of the tool, the axial length L_{T'} and diameter D_{T'} of the tool part 202, and the axial length L_{H'} and diameter D_{H'} of the holder part 204 from the image data. Regarding the measurement method, the distance from the camera 25 to the shutter 52 is known, and thus, since the length per pixel of image data can be determined by calculation, each length can be determined by counting the number of pixels corresponding to the axial length L_{T'} and diameter D_{T'} of the tool part 202, and the axial length L_{H'} of the holder part 204.

The two-dimensional tool model 210 has a tool part 212 and a holder part 214, and the tool part 212 has a portion 216 of the shank of the tool and a portion 218 of the blade having the cutting edge formed thereon. The tool shape data can include the tool length L₀, which is the axial length from the gauge line of the tool holder to the distal end of the tool, the axial length L_{T} and diameter D_{T} of tool part 212, which is the portion of the tool protruding from the tool holder, and the axial length L_{H} and diameter D_{H} of the holder part 214.

The comparison unit 104 compares the dimensions of the tool obtained form the image data with the dimensions of the tool data. More specifically, the comparison unit 104 calculates at least (1) the difference Δ₁ = L_{0'} - L₀ between the tool length L_{0'} obtained from image data and the tool length L₀ of tool shape data (step S16), (2) the difference Δ₂ = D_{T'} - D_{T} between the diameter D_{T'} of the tool part 202 obtained from the image data and the diameter D_{T} of the tool shape data (step S18), and (3) the difference Δ₃ = diameter D_{H'} - D_{H} between the diameter D_{H'} of the holder part 204 obtained from image data and the diameter D_{H} of the tool shape data (step S20).

The comparison unit 104 further compares the differences Δ₁, Δ₂, and Δ₃ with the threshold values related to the tool length, the threshold values related to the diameter of the tool part, and the threshold values related to the diameter of the holder part (step S22), respectively and when all of the differences Δ₁, Δ₂, and Δ₃ are less than the respective threshold values (YES in step S22), it is determined that the shape of the tool 5 obtained from the image data matches the shape of the two-dimensional tool model obtained based on the tool shape data obtained from the interference checking unit 110 (step S24). When even one of the differences Δ₁, Δ₂, and Δ₃ is equal to the threshold value or greater than the threshold value (NO in step S22), it is determined that the shape of the tool 5 obtained from the image data does not match the shape of the two-dimensional tool model, and the tool is an invalid tool (step S26). Invalid tools include the case in which the tool, tool holder, tool number or pot number is incorrect, or when a damaged tool is mounted on the tool holder. The controller 100 issues an audio warning such as a warning sound or a visual warning such as displaying a warning on the display unit 114 (step S28), and prevents the tool exchange of the tool, or prevents machining with the tool.

It is possible to inspect whether the correct tool has been assigned the correct tool number or pot number and is held in the tool magazine 41. The tool inspection process described above can be performed when the operator mounts or inserts a tool 5 into the tool magazine 41, or can be performed collectively for all of the tools 5 held by the tool magazine 41 before the start of machining.

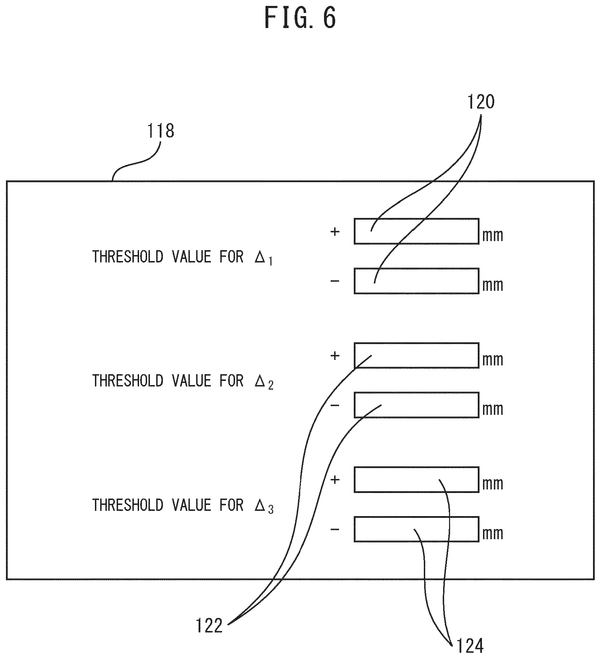

The threshold values stored in the storage unit 106 can be one value for all the of the differences Δ₁, Δ₂ and Δ₃, or can be different values for each of the differences Δ₁, Δ₂ and Δ₃. Furthermore, the threshold values in the storage unit 106 may be fixed values, or the operator may be able to edit the values from the input unit 116. FIG. 6 shows an editing screen or dialog box 118 of the threshold values displayed on the display unit 114. The editing screen 118 includes input boxes 120, 122, 124 for inputting threshold values for each of the differences Δ₁, Δ₂, and Δ₃. For each of the input boxes 120, 122, and 124, a positive value and a negative value of the threshold value can be input separately.

In the example described above, though the image data and the two-dimensional tool model are compared regarding the tool length, the diameter of the tool part and the diameter of the holder part, in addition thereto, the axial length of the tool part and/or the axial length of the holder part may also be compared between the image data and the two-dimensional tool model.

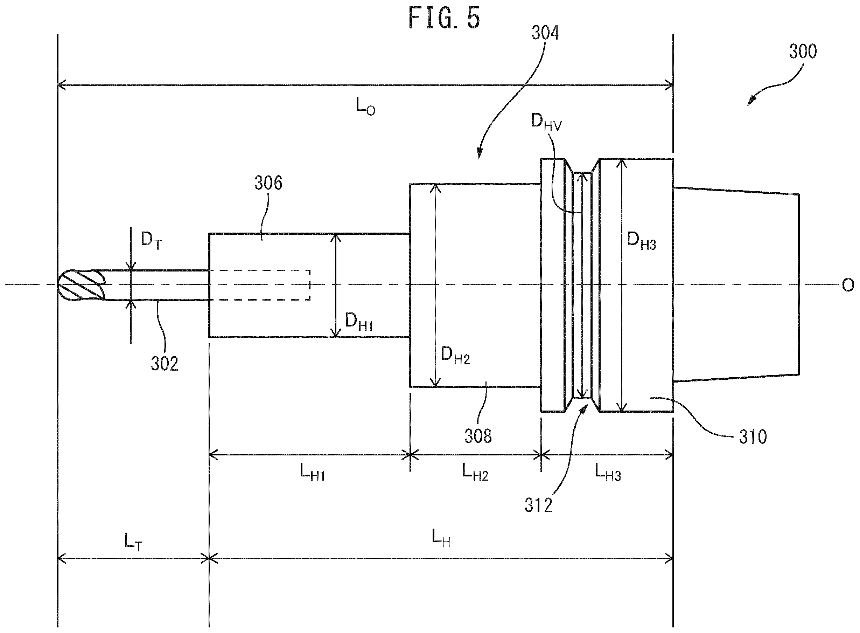

FIG. 5 shows another example of a two-dimensional tool model generated by the comparison unit 104 based on the shape data of the tool received from the interference checking unit 110. In FIG. 5, a two-dimensional tool model 300 is shown in a state in which the tool is mounted on the distal end part of the tool holder. The two-dimensional tool model 300 includes a tool part 302, which is a portion of the tool protruding from the tool holder, and a holder part 304, which is a portion of the tool holder. If the tool holder has a more complex shape than the example shown in FIGS. 3 and 4 and contains areas with different diameters, the tool shape data includes the axial length and diameter for each area. FIG. 5 shows an example in which the holder part 304 includes first to third areas 306, 308, 310.

The tool shape data includes a tool length L₀, which is the axial length from the gauge line of the tool holder to the distal end of the tool along the central axis O, and in relation to the tool part, the axial length L_{T} and diameter D_{T} of the tool part 302 protruding from the tool holder, and the axial length L_{H} of the holder part 304. The tool shape data can include the diameter of the holder part 304.

In the example shown in FIG. 5, the tool shape data can include the axial length L_{H1} and diameter D_{H1} of the first area 306, which is the distal end portion of the tool holder, the axial length L_{H2} and diameter D_{H2} of the second area 308, which is an intermediate portion adjacent to the first area 306, and the axial length L_{H3} and diameter D_{H3} of the third area 310, which is the proximal portion adjacent to the second area 308. If the tool holder has a V-groove that engages the tool exchange arm 43, the tool shape data may include a diameter D_{HV} of the portion 312 of the V-groove.

In this example as well, in addition to the tool length, the tool part diameter, and the holder part diameter, the axial length of the tool part and/or the axial length and diameter of each area 306 to 310 of the holder part may be compared between the image data and the two-dimensional tool model.

According to the present embodiment, since a two-dimensional tool model is generated from the image data obtained by imaging the tool in a state in which the tool is mounted on the tool holder and the shape data of the tool in a state in which the tool is mounted on the tool holder from the interference checking unit 110, and the image data is compared with the two-dimensional tool model, it can be assuredly determined whether or not the tool mounted on the tool magazine is the correct tool described in the machining program which has been checked for interference and it can be assuredly determined whether or not the tool is damaged.

### REFERENCE SIGNS LIST

- 1: Machine Tool
- 5: Tool
- 24: Imaging Device
- 25: Camera
- 40: Tool Exchange Device
- 41: Tool Magazine
- 45: Tool Holder
- 61: Machining Chamber
- 62: Tool Storage Chamber
- 100: Controller
- 102: Determination Unit
- 104: Comparison Unit
- 106: Storage Unit
- 108: Machine Control Unit
- 110: Interference Checking Unit
- 112: Storage Unit
- 114: Display Unit
- 116: Input Unit
- 118: Editing Screen
- 120: Input Box
- 122: Input Box
- 124: Input Box
- 200: Binary Image
- 202: Tool Part
- 204: Holder Part
- 210: Two-Dimensional Tool Model
- 212: Tool Part
- 214: Holder Part
- 300: Two-Dimensional Tool Model
- 302: Tool Part
- 304: Holder Part
- 306: First Area
- 308: Second Area
- 310: Third Area

## Claims

1. A machine tool system (1), comprising a spindle (4) configured such that a tool (5) is mounted on a distal end part thereof, a tool magazine (41) which holds a plurality of tools (5), a tool exchange arm (43) which exchanges tools (5) between the tool magazine (41) and the rotating spindle (4), and a table (14) to which a workpiece (W) is attached, wherein the workpiece (W) is machined by moving the spindle (4) and the table (14) relative to each other in accordance with a machining program, the machine tool system (1) comprising:
an imaging device (24) which generates an image of the tool (5) mounted on a tool holder (45) along with the tool holder (45), wherein the tool holder (45) has a gauge line, and wherein the image of the tool (5) generated by the imaging device (24) includes a holder part (204), which is a portion which holds the tool (5), and a tool part (202), which is a portion of the tool (5) protruding from the tool holder (45);
a storage unit (106) configured to store threshold values related to a tool length (L'_{T}), a diameter of the tool part (D'_{T}) and a diameter of the holder part (D'_{H});
an interference checking device (110) which simulates machining, prior to machining, using the machining program and shape data of the workpiece (W), the tool (5), and a machine tool (1) to confirm the presence or absence of interference between at least the tool (5) and the workpiece (W), and
a controller (100) which acquires the shape data of the tool (5) mounted on the tool holder (45) from the interference checking device (110), generates a two-dimensional tool model from the acquired shape data of the tool (5) in which the tool (5) mounted on the tool holder (45) and the tool holder (45) are projected onto a plane, compares a tool length (L'_{T}), which is an axial direction length from the gauge line to the distal end of the tool (5), a diameter of the tool part (D'_{T}) and a diameter of the holder part (D'_{H}) of the two-dimensional tool model and the image of the tool (5) imaged by the imaging device (24), and determines that the tool (5) is invalid when a deviation between the tool length (L'_{T}), the diameter of the tool part (D'_{T}) or the diameter of the holder part(D'_{H}) of the two-dimensional tool model and the image data is equal to or greater than the corresponding threshold value stored in the storage unit (106).

2. The machine tool system (1) according to claim 1, wherein the imaging device (24) is arranged in a tool storage chamber (62) in which the tool magazine (41) is stored and images while the tool (5) is stationary.

3. A tool determining method for determining whether or not a valid tool (5) is mounted on a tool magazine (41) of a machine tool system (1) comprising a rotary spindle (4) configured such that a tool (5) is mounted on a distal end part thereof, the tool magazine (41) which holds a plurality of tools (5), a tool exchange arm (43) which exchanges tools (5) between the tool magazine (41) and the rotary spindle (4), and a table (14) on which a workpiece (W) is attached, wherein the workpiece (W) is machined by moving the spindle (4) and the table (14) relative to each other in accordance with a machining program to machine the workpiece (W), the tool determining method comprising the steps of:
imaging the tool (5) mounted on the tool holder (45) along with the tool holder (45) so as to generate an image of the tool (5) which includes a holder part (204), which is a portion which holds the tool (5), and a tool part (202), which is a portion of the tool (5) protruding from the tool holder (45), wherein the tool holder (45) has a gauge line,
simulating machining prior to machining using the machining program and shape data of the workpiece (W), the tool (5), and a machine tool (1) and acquiring shape data of the tool (5) mounted on a tool holder (45) from an interference checking device (110) which confirms the presence or absence of interference between at least the tool (5) and the workpiece (W),
generating a two-dimensional tool model from the acquired shape data of the tool (5) in which the tool (5) mounted on the tool holder (45) and the tool holder (45) are projected onto a plane,
comparing a tool length (L'_{T}), which is an axial direction length from the gauge line to the distal end of the tool (5), a diameter of the tool part (D'_{T}) and a diameter of the holder part (D'_{H}) of the two-dimensional tool model and the image of the tool (5), and
determining that the tool (5) is invalid when a deviation between the tool length (L'_{T}), the diameter of the tool part (D'_{T}) or the diameter of the holder part (D'_{H}) of the two-dimensional tool model and the image data is equal to or greater than a corresponding threshold value stored in a storage unit (106).

## Patentansprüche

1. Werkzeugmaschinensystem (1), umfassend eine Spindel (4), die so eingerichtet ist, dass an deren distalem Endteil ein Werkzeug (5) montiert ist, ein Werkzeugmagazin (41), das eine Mehrzahl von Werkzeugen (5) enthält, einen Werkzeugwechselarm (43), der Werkzeuge (5) zwischen dem Werkzeugmagazin (41) und der rotierenden Spindel (4) austauscht, und einen Tisch (14), an dem ein Werkstück (W) befestigt ist, wobei das Werkstück (W) bearbeitet wird, indem die Spindel (4) und der Tisch (14) gemäß einem Bearbeitungsprogramm relativ zueinander bewegt werden, wobei das Werkzeugmaschinensystem (1) umfasst:
eine Abbildungsvorrichtung (24), die ein Bild des an einem Werkzeughalter (45) montierten Werkzeugs (5) zusammen mit dem Werkzeughalter (45) erzeugt, wobei der Werkzeughalter (45) eine Messlinie aufweist, und wobei das von der Abbildungsvorrichtung (24) erzeugte Bild des Werkzeugs (5) einen Halterteil (204), der ein Abschnitt ist, der das Werkzeug (5) hält, und einen Werkzeugteil (202) umfasst, der ein Abschnitt des Werkzeugs (5) ist, der aus dem Werkzeughalter (45) hervorsteht;
eine Speichereinheit (106), die dazu eingerichtet ist, Schwellenwerte in Bezug auf eine Werkzeuglänge (L'_{T}), einen Durchmesser des Werkzeugteils (D'_{T}) und einen Durchmesser des Halterteils (D'_{H}) zu speichern;
eine Kollisionsprüfvorrichtung (110), die eine Bearbeitung vor der Bearbeitung simuliert, indem sie das Bearbeitungsprogramm und Formdaten des Werkstücks (W), des Werkzeugs (5) und einer Werkzeugmaschine (1) verwendet, um das Vorhandensein oder Nichtvorhandensein einer Kollision zwischen zumindest dem Werkzeug (5) und dem Werkstück (W) zu bestätigen, und
eine Steuerung (100), welche die Formdaten des am Werkzeughalter (45) montierten Werkzeugs (5) von der Kollisionsprüfvorrichtung (110) erfasst, aus den erfassten Formdaten des Werkzeugs (5) ein zweidimensionales Werkzeugmodell erzeugt, in dem das am Werkzeughalter (45) montierte Werkzeug (5) und der Werkzeughalter (45) auf eine Ebene projiziert werden, eine Werkzeuglänge (L'_{T}), die eine Länge in axialer Richtung von der Messlinie zum distalen Ende des Werkzeugs (5) ist, einen Durchmesser des Werkzeugteils (D'_{T}) und einen Durchmesser des Halterteils (D'_{H}) des zweidimensionalen Werkzeugmodells und das von der Abbildungsvorrichtung (24) abgebildete Bild des Werkzeugs (5) vergleicht und bestimmt, dass das Werkzeug (5) unzulässig ist, wenn eine Abweichung zwischen der Werkzeuglänge (L'_{T}), dem Durchmesser des Werkzeugteils (D'_{T}) oder dem Durchmesser des Halterteils (D'_{H}) des zweidimensionalen Werkzeugmodells und den Bilddaten gleich oder größer als der entsprechende, in der Speichereinheit (106) gespeicherte Schwellenwert ist.

2. Werkzeugmaschinensystem (1) nach Anspruch 1, wobei die Abbildungsvorrichtung (24) in einer Werkzeugaufbewahrungskammer (62) angeordnet ist, in der das Werkzeugmagazin (41) aufbewahrt wird, und Bilder erzeugt, während das Werkzeug (5) stationär ist.

3. Werkzeugbestimmungsverfahren zum Bestimmen, ob ein gültiges Werkzeug (5) an einem Werkzeugmagazin (41) eines Werkzeugmaschinensystems (1) montiert ist oder nicht, umfassend eine rotierende Spindel (4), die so eingerichtet ist, dass an deren distalem Endteil ein Werkzeug (5) montiert ist, das Werkzeugmagazin (41), das eine Mehrzahl von Werkzeugen (5) enthält, einen Werkzeugwechselarm (43), der Werkzeuge (5) zwischen dem Werkzeugmagazin (41) und der rotierenden Spindel (4) austauscht, und einen Tisch (14), an dem ein Werkstück (W) befestigt ist, wobei das Werkstück (W) bearbeitet wird, indem die Spindel (4) und der Tisch (14) gemäß einem Bearbeitungsprogramm relativ zueinander bewegt werden, um das Werkstück (W) zu bearbeiten, wobei das Werkzeugbestimmungsverfahren die folgenden Schritte umfasst:
Abbilden des auf dem Werkzeughalter (45) montierten Werkzeugs (5) zusammen mit dem Werkzeughalter (45), um ein Bild des Werkzeugs (5) zu erzeugen, das einen Halterteil (204), der ein Abschnitt ist, der das Werkzeug (5) hält, und einen Werkzeugteil (202) umfasst, der ein Abschnitt des Werkzeugs (5) ist, der aus dem Werkzeughalter (45) hervorsteht, wobei der Werkzeughalter (45) eine Messlinie aufweist,
Simulieren einer Bearbeitung vor der Bearbeitung unter Verwendung des Bearbeitungsprogramms und von Formdaten des Werkstücks (W), des Werkzeugs (5) und einer Werkzeugmaschine (1) und Erfassen von Formdaten des an einem Werkzeughalter (45) montierten Werkzeugs (5) von einer Kollisionsprüfvorrichtung (110), die das Vorhandensein oder Nichtvorhandensein einer Kollision zwischen zumindest dem Werkzeug (5) und dem Werkstück (W) bestätigt,
Erzeugen eines zweidimensionalen Werkzeugmodells aus den erfassten Formdaten des Werkzeugs (5), in dem das am Werkzeughalter (45) montierte Werkzeug (5) und der Werkzeughalter (45) auf eine Ebene projiziert werden,
Vergleichen einer Werkzeuglänge (L'_{T}), die eine Länge in axialer Richtung von der Messlinie bis zum distalen Ende des Werkzeugs (5) ist, eines Durchmessers des Werkzeugteils (D'_{T}) und eines Durchmessers des Halterteils (D'_{H}) des zweidimensionalen Werkzeugmodells und des Bildes des Werkzeugs (5), und
Bestimmen, dass das Werkzeug (5) unzulässig ist, wenn eine Abweichung zwischen der Werkzeuglänge (L'_{T}), dem Durchmesser des Werkzeugteils (D'_{T}) oder dem Durchmesser des Halterteils (D'_{H}) des zweidimensionalen Werkzeugmodells und den Bilddaten gleich oder größer als ein entsprechender Schwellenwert ist, der in einer Speichereinheit (106) gespeichert ist.

## Revendications

1. Système de machine-outil (1), comprenant une broche (4) configurée de telle sorte qu'un outil (5) est monté sur une partie d'extrémité distale de celle-ci, un magasin d'outils (41) qui contient une pluralité d'outils (5), un bras d'échange d'outils (43) qui échange des outils (5) entre le magasin d'outils (41) et la broche rotative (4), et une table (14) à laquelle une pièce à usiner (W) est fixée, dans lequel la pièce à usiner (W) est usinée en déplaçant la broche (4) et la table (14) l'une par rapport à l'autre conformément à un programme d'usinage, le système de machine-outil (1) comprenant :
un dispositif d'imagerie (24) qui génère une image de l'outil (5) monté sur un porte-outil (45) avec le porte-outil (45), dans lequel le porte-outil (45) présente une ligne de jauge, et dans lequel l'image de l'outil (5) générée par le dispositif d'imagerie (24) inclut une partie de support (204), qui est une partie qui maintient l'outil (5), et une partie d'outil (202), qui est une partie de l'outil (5) faisant saillie à partir du porte-outil (45) ;
une unité de stockage (106) configurée pour stocker des valeurs de seuil liées à une longueur d'outil (L'_{T}), à un diamètre de la partie d'outil (D'_{T}) et à un diamètre de la partie de support (D'_{H}) ;
un dispositif de vérification d'interférence (110) qui simule un usinage, avant l'usinage, en utilisant le programme d'usinage et les données de forme de la pièce à usiner (W), de l'outil (5) et d'une machine-outil (1) pour confirmer la présence ou l'absence d'interférence entre au moins l'outil (5) et la pièce à usiner (W), et
un dispositif de commande (100) qui acquiert les données de forme de l'outil (5) monté sur le porte-outil (45) à partir du dispositif de vérification d'interférence (110), génère un modèle d'outil bidimensionnel à partir des données de forme acquises de l'outil (5) dans lequel l'outil (5) monté sur le porte-outil (45) et le porte-outil (45) sont projetés sur un plan, compare une longueur d'outil (L'_{T}), qui est une longueur de direction axiale depuis la ligne de jauge jusqu'à l'extrémité distale de l'outil (5), un diamètre de la partie d'outil (D'_{T}) et un diamètre de la partie de support (D'_{H}) du modèle d'outil bidimensionnel et de l'image de l'outil (5) imagée par le dispositif d'imagerie (24), et détermine que l'outil (5) est invalide lorsqu'un écart entre la longueur d'outil (L'_{T}), le diamètre de la partie d'outil (D'_{T}) ou le diamètre de la partie de support (D'_{H}) du modèle d'outil bidimensionnel et les données d'image est égal ou supérieur à la valeur de seuil correspondante stockée dans l'unité de stockage (106).

2. Système de machine-outil (1) selon la revendication 1, dans lequel le dispositif d'imagerie (24) est agencé dans une chambre de stockage d'outil (62) dans laquelle le magasin d'outils (41) est stocké, et image pendant que l'outil (5) est stationnaire.

3. Procédé de détermination d'outil pour déterminer si un outil valide (5) est monté ou non sur un magasin d'outils (41) d'un système de machine-outil (1) comprenant une broche rotative (4) configurée de telle sorte qu'un outil (5) est monté sur une partie d'extrémité distale de celle-ci, le magasin d'outils (41) qui contient une pluralité d'outils (5), un bras d'échange d'outil (43) qui échange des outils (5) entre le magasin d'outils (41) et la broche rotative (4), et une table (14) sur laquelle une pièce à usiner (W) est fixée, dans lequel la pièce à usiner (W) est usinée en déplaçant la broche (4) et la table (14) l'une par rapport à l'autre conformément à un programme d'usinage pour usiner la pièce à usiner (W), le procédé de détermination d'outil comprenant les étapes consistant à :
imager l'outil (5) monté sur le porte-outil (45) avec le porte-outil (45) de manière à générer une image de l'outil (5) qui inclut une partie de support (204), qui est une partie qui maintient l'outil (5), et une partie d'outil (202), qui est une partie de l'outil (5) faisant saillie à partir du porte-outil (45), dans lequel le porte-outil (45) présente une ligne de jauge,
simuler un usinage avant l'usinage en utilisant le programme d'usinage et des données de forme de la pièce à usiner (W), de l'outil (5) et d'une machine-outil (1), et acquérir les données de forme de l'outil (5) monté sur un porte-outil (45) à partir d'un dispositif de vérification d'interférence (110) qui confirme la présence ou l'absence d'interférence entre au moins l'outil (5) et la pièce à usiner (W),
générer un modèle d'outil bidimensionnel à partir des données de forme acquises de l'outil (5), dans lequel l'outil (5) monté sur le porte-outil (45) et le porte-outil (45) sont projetés sur un plan,
comparer une longueur d'outil (L'_{T}), qui est une longueur de direction axiale depuis la ligne de jauge jusqu'à l'extrémité distale de l'outil (5), un diamètre de la partie d'outil (D'_{T}) et un diamètre de la partie de support (D'_{H}) du modèle d'outil bidimensionnel et l'image de l'outil (5), et
déterminer que l'outil (5) est invalide lorsqu'un écart entre la longueur d'outil (L'_{T}), le diamètre de la partie d'outil (D'_{T}) ou le diamètre de la partie de support (D'_{H}) du modèle d'outil bidimensionnel et les données d'image sont égales ou supérieures à une valeur de seuil correspondante stockée dans une unité de stockage (106).
